# EUROPÄISCHE PATENTANMELDUNG

(11) **EP 2 589 915 A2**
(43) Veröffentlichungstag der Anmeldung: **08.05.2013**
(21) Anmeldenummer: 12190976.6
(22) Anmeldetag: 01.11.2012
(51) Int. Cl.: F28D 20/00

(54) **Energiespeicher zur Speicherung thermischer Energie**

(30) Priorität: 03.11.2011 DE 102011055014
(71) Anmelder: Weindel, Gerald, 22081 Hamburg (DE)
(72) Erfinder: Weindel, Gerald, 22081 Hamburg (DE)
(74) Vertreter: Richter Werdermann Gerbaulet Hofmann

(57) **Zusammenfassung**

Ein Energiespeicher (100) zur Speicherung thermischer Energie, wobei der Speicher als Wärme- und/oder Kältespeicher ausgeführt und mit einer Wärmeisolation (11) sowie einem elastischen Behälter für ein Speichermedium, insbesondere ein Fluid (14), versehen ist, soll lange Wärmeenergie speichern können und kostengünstig zu verwirklichen sein. Eine Volumenkompensation ist konstruktiv im Speicher enthalten. Der Speicher hat im demontierten Zustand ein nur geringes Volumen und geringes Gewicht und lässt sich daher einfach transportieren. Zudem soll er vielseitig einsetzbar sein. Dies wird erreicht durch mehrere, untereinander durch Leitungen, zumindest teilweise in Reihenschaltung, verbundenen Speicherzellen (10), die zu einem Gesamtzellenspeicher, insbesondere aneinanderliegend, zusammengesetzt sind, wobei jede Speicherzelle (10) ein Zellengehäuse (18) aus Dämmmaterial umfasst und innerhalb des Zellengehäuses (18) ein für das Speichermedium undurchlässiger Behälterkörper (13) angeordnet ist.

## Beschreibung

### Technisches Gebiet

Die Erfindung betrifft einen Energiespeicher zur Speicherung thermischer Energie, wobei der Speicher als Wärme- und/oder Kältespeicher ausgeführt und mit einer Wärmeisolation sowie einem Behälter für ein Speichermedium, insbesondere ein Fluid, versehen ist.

Wärmespeicher, oder Pufferspeicher genannt, dienen der Einspeisung, Speicherung und Entnahme der in einem Fluid enthaltenen thermischen Energie, um sie bedarfsweise einer Wärmeversorgungsanlage eines Gebäudes und dergleichen zur Verfügung zu stellen. Die Gewinnung der thermischen Energie und deren Einspeisung in den Speicher kann kontinuierlich durch z.B. einen Brennstoffkessel oder diskontinuierlich durch z.B. Solarkollektoren erfolgen.

Um eine Speicherung von thermischer Energie in einem Speicher über einen längeren Zeitraum zu erreichen, ist eine thermische Isolierung erforderlich. Eine wirksame Isolierung reduziert den Verlust der thermischen Energie des Speichers an die Umgebung und erhöht die Effizienz einer Wärmeversorgungsanlage.

### Stand der Technik

Die DE 296 02 904 U1 zeigt und beschreibt einen Wärmespeicher und ein zugehöriges Wärmekreislauf-System. Dieses ist mit einem oder mehreren Wärmespeichern und zugehörigen peripheren Geräten ausgestattet. Die zugehörigen peripheren Geräte umfassen Heizkörper, Warmluftgeneratoren, Umluftverteiler, Solarabsorber, Wärmetauscher und Wärmeübertragungsröhre sowie Regler, Wärmepumpen und dergleichen, um ein Kreislaufsystem für die Beheizung von Räumen, Flächen oder einzelnen Gegenständen betreiben zu können. Der verwendete Wärmespeicher ist als Erdtank nach Art einer Thermoskanne ausgebildet. Eine Ausmauerung der Thermoskanne besteht aus einer Styropor/Betonmischung. Ein Thermosbehälter wird im Inneren mit feinem Quarzsand gefüllt. Im Quarzsand sind die für das Wärmekreislauf-System erforderlichen Leitungen wärmeisolierend eingebettet.

Aus der DE 20 2010 013 137 U1 ist ein Speicher zur Speicherung von thermischer Energie bekannt. Dieser weist ein von der Umgebung thermisch isoliertes, zylinderförmiges Speichervolumen auf. Das Speichervolumen weist zwei Anschlüsse zum Zu- und Ableiten eines Fluids auf. Das Speichervolumen ist in überwiegend koaxialer Weise von einer Außenhülle beabstandet umgeben. In dem zwischen dem Speichervolumen und der Außenhülle gebildeten Hohlraum ist ein festes Dämmmaterial angeordnet.

### Darstellung der Erfindung: Aufgabe, Lösung, Vorteile

Der Erfindung liegt die Aufgabe zugrunde, einen Energiespeicher der eingangs genannten Art bereitzustellen, der Wärmeenergie lange speichert und kostengünstig zu verwirklichen ist. Zudem soll er vielseitig einsetzbar sein.

Diese Aufgabe wird durch einen Speicher mit den im kennzeichnenden Teil des Anspruches 1 angegebenen Merkmalen gelöst.

Der erfindungsgemäße Energiespeicher dient zur Speicherung thermischer Energie. Hierunter wird auch die Speicherung von "Kälte" verstanden, um beispielsweise einen Puffer für eine Klimaanlage zu schaffen. Eine Kopplung von Wärme- und Kälte-Speicherung ist möglich.

Mit der Wärmeisolation soll die Temperatur lange gehalten werden. Ein Fluid, wie Wasser, Glykol und dergleichen wird in einem geeigneten Behälter (z. B. einer elastischen Blase bzw. Membran) gelagert. Durch mehrere bzw. viele Speicherzellen, die untereinander durch Leitungen für Zu- und Ablauf in Reihenschaltung verbunden sind, wird ein Gesamtzellenspeicher geschaffen, der ein hohes Speichervermögen hat. Durch die aneinanderliegende Zusammensetzung ist eine hohe Energieeffizienz gegeben. Jede Speicherzelle hat ein Zellengehäuse aus Dämmmaterial, insbesondere Hartschaum, wie Polystyrol oder Polyurethan, was eine hohe Wärmeisolierung aufweist. Zur Leistungssteigerung kann auch ein Verbundwerkstoff mit Vakuumdämmtechnik eingesetzt werden. Die Abdichtung übernimmt der innerhalb des Zellengehäuses angeordneter Behälterkörper.

Durch die erfindungsgemäße Speicherausführung werden folgende nachteilige Effekte vermieden bzw. reduziert:
- Mikrozirkulation in der Grenzschicht
- Wärmestrahlung über die Grenzschicht
- Konvektion im Speicher
- Wärmeleitung am Metallkörper eines Metallspeichers
- Wärmeleitung über die inneren Wärme-Tauscher-Wendel
- Wärmeabgabe nach außen
- Verwirbelungen beim Be- und Entladevorgang
- Wärmeverluste über die Isolierung und Verrohrung

Der erfindungsgemäße Energiespeicher hat folgende Vorteile:
- Der Speicher muss nicht aus Metall sein
- Er hat keine bzw. stark reduzierte Schichtenspeicher-Verluste, da ein segmentierter Zellenspeicher mit minimaler Grenzschichtanteil in nur einer Speicherzelle möglich ist
- Eine leichte Ausführung ist möglich
- Er hat - im nicht aufgebauten Zustand - nur kleine Abmessungen und ist daher leicht transportierbar
- Er ist kostengünstig herstellbar
- Er kann schnell montiert/demontiert werden
- Er hat minimalste thermische Verluste
- Eine Volumenkompensation ist in der Speicherkonstruktion bereits realisiert
- Er ist drucklos oder mit einer druckbeständigen Membran einsetzbar
- Durch die Modulbauweise bzw. Zellenstruktur lässt sich der Speicher in jeden Raum (Immobilie) gut integrieren. Der Speicher ist frei kaskadierbar, so dass im Grunde ein beliebiges Speichervolumen möglich ist.
- Er kann eine bewährte Reihenschaltung als Zellenspeicher nutzen
- Der Wirkungsgrad kann durch eingebettete Vakuum-Dämmpaneele erhöht werden, damit entstehen weder innere Zirkulation noch Grenzschichtverluste und auch keine Abstrahlverluste
- Der Speicher hat keine Verschleißteile, keine Alterung, keine Korrosion und daher eine lange Lebensdauer
- Er kann als druckloser Speicher ausgeführt sein und hat somit keine Prüfpflicht
- Durch Modulbauweise sind eine Fließbandfertigung, eine Standardisierung und große Stückzahlen möglich

Weitere vorteilhafte Ausgestaltungen der Erfindung sind in den Unteransprüchen gekennzeichnet.

In einer vorteilhaften Weiterbildung des erfindungsgemäßen Speichers ist vorgesehen, dass jede Speicherzelle ein quaderförmiges Zellengehäuse mit einem im Wesentlich geometrisch angepassten inneren Behälterkörper aufweist. Dadurch können die Speicherzellen platzsparend und ohne Hohlräume nebeneinander und übereinander zusammengesetzt werden. Es können ein-, zwei- oder dreidimensionale Anordnungen (eine Reihe, eine Matrix, übereinander gestapelte Reihen und Spalten bzw. dreidimensionale Matrix) verwendet werden. Durch die fehlende Zylinderform ist eine maximale Raum- und Flächenausnutzung möglich.

Bei einer weiteren vorteilhaften Ausführung der Erfindung besteht jeder Behälterkörper aus einem elastischen Material. Dadurch ist kein zusätzliches Speicher-Peripherie-Element, z. B. ein Ausdehnungsgefäß, erforderlich.

Zur Formgebung unter Druck und um eine unkontrollierte Ausdehnung zu verhindern, ist nach einer weiteren vorteilhaften Weiterbildung der Erfindung jeder Behälterkörper (elastische Blase bzw. Membran-Sack) mit einem Stützgeflechtkäfig aus einem Gewebenetz versehen. Dieser begrenzt die Ausdehnung des elastischen Materials. Eine zusätzliche Rahmenkonstruktion aus formstabilen Verstärkungselementen erhöht die Festigkeit.

Eine kostengünstige und montagefreundliche Lösung zur modularen Bauweise wird dadurch geschaffen, dass eine aus Halbschalen und/oder Viertelschalen bestehende Gehäusekonstruktion des Gesamtspeichers mit T-, Doppel-T-, U-, L- und/oder kreuzförmigen Gehäuseelementen eingesetzt wird.

Damit große Bauhöhen, zum Beispiel von über 30 Metern, bzw. stabile Konstruktionen erreicht werden können, ist zweckmäßigerweise jedes Zellengehäuse mit Verbindungselementen und/oder Verstärkungselementen und/oder Spannelementen versehen. Es können formstabile Platten, Winkeln oder Spannbänder zur mechanischen Verstärkung verwendet werden. Es kann beispielsweise ein mit Spannbändern verstärkter EPS-Korpus als Dämmkörper und als Aufnahmegehäuse für eine Speichermembran (Fluidbehälter) in einem Halb- oder Viertelschalen-Aufbau eingesetzt werden.

Eine besonders bevorzugte Weiterbildung der Erfindung zeichnet sich dadurch aus, dass zumindest ein Teil der Speicherzellen (zwei Speicherzellen, z.B. die erste und die letzte der Reihenschaltung) insbesondere aber jede Speicherzelle mit einem Sensor zur Erfassung einer physikalischen Zustandsgröße versehen ist. Dieser kann ein Temperatursensor, ein Füllstandssensor, ein Drucksensor oder eine beliebige Sensorkombination davon sein. Durch eine zentrale Steuerung oder eine Master-Slave Lösung ist eine Speicheroptimierung möglich.

Der Energiespeicher kann in einem Energieversorgungssystem eines Ein- oder Zwei-Familienhauses (Wärmeleistung: 5 - 50 kW), eines Mehrfamilienhauses (über 50 kW), oder eines anderen Gebäudes oder einer technischen Anlage verwendet werden. Weitere Anwendungen zur Wärmespeicherung mit Leistungen von z.B. 500 kW - 50.000 kW sind auch möglich. Der Speicher kann in einem solaren Wärmeenergiesystem (Solarthermie) unter Verwendung von Sonnenkollektoren bzw. Dachkollektoren eingesetzt werden. Der Speicher kann in einem Wärmepumpensystem und/oder mit einer kraft-wärmegekoppelten Anlage verwendet werden. Über eine vernetzte Anlage mit Fernstart über eine Lastmanagementzentrale ermöglicht der Speicher eine zeitliche und mengenmäßige Entkopplung zwischen der Wärmeerzeugung und dem Wärmeverbrauch und einer Stromerzeugung, was insbesondere für die Speicherung von Wärme aus Umweltenergie oder einer kraft-wärmegekoppelten Anlage vorteilhaft ist.

Besonders vorteilhaft ist ein Verfahren zum Betrieb des Energiespeichers, bei dem Wärmeenergie eines Kraft-Wärmekopplungskraftwerks bzw. Kraft-Wärmekopplungs-Aggregat (BHKW; Block-Heiz-Kraft-Werk) gespeichert wird, um die bei elektrischer Spitzenlast produzierte Wärmeenergie zu speichern. In Spitzenlastzeiten sollte ein BHKW immer elektrische Energie produzieren. Die Spitzenlastenergie ist für die Netzeinspeisung die teuerste Energie. In diesen (kurzen) Zeitabschnitten sollte ein BHKW immer Energie produzieren. Vorteilhaft ist ein Verbund von vielen vernetzen Anlagen (als virtuelles Kraft-werk), die über einen Fernstart und eine Lastmanagementzentrale verfügt.

Besonders günstig ist ein Ansteuerungsverfahren des Energiespeichers, bei dem eine Steuerung durch mindestens eine Hydraulik-Steuerungseinheit erfolgt. Es kann eine Pumpen-Steuerungs-Komponente bzw. eine Pumpensteuerungs-Armaturengruppe (PSA-Gruppe) verwendet werden. Jede Speicherzelle kann eine Sensorik, ein Ventil und mehrere Rohren umfassen. Der Gesamtspeicher kann mit einer Steuerungselektronik, einer Pumpe und einem Wärmetauscher versehen sein.

Es können auch Fertigteile mit Elektronik, Sensorik, Pumpen, Ventilen, Wärmetauschern, Rohren und anderen Bauteilen gefertigt werden. Die Bauteile sind vorzugsweise aufeinander und mit einer Steuerungsgruppe abgestimmt, was eine Massenfertigung vereinfacht. Diese wird quasi als nur ein Teil installiert. Standardisierte Gruppen in verschiedenen Leistungsbandbreiten sind auch möglich. Die wärmegedämmten Formteile können zu dem Speicher als elektrisch verbundene Einheit ausgeführt sein. Auch ist eine TrinkWarmwasseraufbereitung im Durchlauferhitzerprinzip mit einem Wasser/Wasser-Wärmetauscher (Frischwasserstation) möglich. Die Steuerung schafft eine intelligente temperaturabhängige Einspeicherung in verschiedene Speicherzellen. Somit ist eine Mehrfachnutzung von Wärme für verschiedene Prozesse in unterschiedlichen Temperaturströmen. Beispielsweise sind 80°C Speichertemperatur bei einer Warmwasserzirkulation von 57°C und einer Heizwärme bei einer statischen Heizung von 46°C mit einer Heizwärme bzw. Raumlufttechnik von 32°C und einer Fußbodenheizung mit 21°C denkbar. Auch ist eine Zellen-Ventilmatrix, die wärmebedarfs- und temperaturgesteuert verschaltet wird, vorstellbar. Als Basis kann ein Industrie-PC dienen bzw. eine Steuerung für alle Komponenten auch außerhalb des Speichers vorhanden sein. Bei einer Wärmeerzeugungsanlage, BHKW, Wärmepumpe, Solaranlage kann die PumpenVentil-Hydraulikgruppe mit Verbrauchserfassung, Abrechnung und/oder Statistik eingesetzt werden. Standardisierte Protokolle und Menüs vereinfachen eine Konfiguration und einen Datentransfer. Bevorzugt wird eine grafische Konfiguration der Gesamtanlagen bzw. eine automatische Ermittlung und Übernahme von regelungstechnischen Optima. Möglich ist auch eine erweiterte Sensorik, die eine Vorlauftemperatur, eine Rücklauftemperatur, ein Volumenstrom und/oder Drücke detektiert. Ohne Weiteres kann eine intelligente Regelungstechnik auf Basis einer vernetzten Auswertung der Betriebsparameter und/oder Fuzzy-Control-Technik eingesetzt werden. Es können selbstadaptivierende und/oder heuristische Regelungen benutzt werden, um eine Verbrauchsprognose, ein Nutzerverhalten, eine thermische Trägheit des Gebäudes und/oder Daten aus dem Internet, wie z.B. Temperaturprognose, Sonnenprognose, Windprognose verarbeitet werden. Nutzbar ist auch ein Selbstdiagnoseservice auf der Basis einer Betriebsdatenüberwachung bzw. eines FAQ-Menü und/oder eines Inbetriebnahmemenü. Die verwendete Datenverarbeitung erlaubt eine Statistik, um z. B. einen aktuellen verbrauchsabhängigen Energiepass zu erstellen und/oder damit eine Plausibilitätsprüfung der anfallenden Daten, so dass eine Meldung, wenn nicht nachvollziehbare Verbrauchs- bzw. Lastprofiländerungen auftreten, stattfinden kann. Eine Kombination mit sogenannten "Optimierungs-Tools", z.B. für einen hydraulischen Abgleich eines Heizungsnetzes über eine vorhandene Sensorik, und/oder Schnittstellen zu Industriestandards (z.B. LON, BacNet) und zu SmartHome (z.B KNX) ist möglich. Kombinierbar ist die Steuerung mit einer Vernetzung mit Internetverbindung (TCPIP), einer Fernansteuerung der Anlagen vom sogenannten "Operation Center", und/oder einer Meldung an dem "Operation Center" bezüglich Verfügbarkeit, Speicherladungskapazität und/oder Bedarfsprognose pro Zeitfenster.

Eine Daten-Meldung über eine Anlagen-Störung und/oder Instandhaltungsintervalle, z.B. im Falle einer Ermittlung eines Verschmutzungsgrads bzw. Instandsetzungsbedarfs eines Wärmetauschers auf Basis der Vor- und Rücklauftemperaturen und/oder Druckdifferenzen, und/oder eine Verbrauchsmeldung und eine Statistik weiterer Medien an eine zentrale Stelle über einen Wasserverbrauch kann mit Hilfe der bevorzugten Steuerung stattfinden. Eine Hydraulik-Steuerungs-Einheit kann aufsteckbar ausgeführt sein.

Ein zentrales Lastmanagement kann mit einer intelligenten Zentralsteuerung kommunizieren. Zentrales Lastmanagement bedeutet "Operation Center". Es führt eine Fern-Anlagensteuerung durch und eine Kommunikation mit Energiehändlern und dient als "Anlagenverwalter" für BHKW und/oder Wärmepumpenanlagen.

Die Lastmanagement-Zentrale bevorzugt eine Datenkommunikation über Standard-Protokolle. Die intelligente Zentralsteuerung berücksichtigt die Wärmeerzeugung, das Speichermanagement, das Verbrauchsmanagement und/oder einen Datenaustausch. Die Zentralsteuerung dient für alle Komponenten und nutzt vorzugsweise intelligente Standardsoftware und/oder eine Datenkommunikation über Standard-Protokolle.

### Kurze Beschreibung der Zeichnungen

Ein Ausführungsbeispiel wird anhand der Zeichnungen näher erläutert, wobei weitere vorteilhafte Weiterbildungen der Erfindung und Vorteile derselben beschrieben sind.

Es zeigen:
Fig. 1 eine Darstellung einer Speicherzelle eines erfindungsgemäßen Wärmespeichers mit Sandwich-Dämmgehäuse aus Hartschaum und Vakuum-Isolations-Paneelen in einer Draufsicht, wobei das Gehäuse mit Spanngurten verstärkt ist,
Fig. 2 eine Draufsicht bzw. eine Schnittdarstellung des Energiespeichers, der in einem Raum angeordnet ist, wobei sechs Speichereinheiten mit jeweils acht Speicherzellen an einem Wandbereich des Raumes platziert und zu einem Gesamtspeicher verbunden sind, die Speicherzellen sind in Reihe geschaltet, so dass die Gesamtspeichereinheit nur einen Ein- und Ausgang hat,
Fig. 3 eine Reihenschaltung von Speicherzellen,
Fig. 4 eine perspektivische Darstellung eines offenen Gehäuses ohne Behälterkörper,
Fig. 5 eine perspektivische Darstellung eines offenen Gehäuses mit Behälterkörper,
Fig. 6 eine Darstellung des Behälterkörpers (Blase bzw. Membran) von der Seite gesehen ohne Druckbeaufschlagung,
Fig. 7 eine Darstellung des Behälterkörpers von der Seite gesehen mit einer Gewebeverstärkung und Bandverstärkung mit Druckbeaufschlagung,
Fig. 8 eine perspektivische Darstellung eines Stützgeflechtkäfiges in einem Speicherzellengehäuse,
Fig. 9 eine Darstellung einer druckbeaufschlagten Blase ohne Verstärkungselemente, somit ist keine Formstabilität gegeben,
Fig. 10 eine Darstellung einer Gewebeverstärkung mit Geflecht und Verstärkungsbändern eines Behälterkörpers (Blase bzw. Membran),
Fig. 11 eine schematische Darstellung eines im Innenbereich mit Spannstangen zur Formgebung unter Druckbeaufschlagung verstärkten Behälterkörpers (Blase bzw. Membran),
Fig. 12 eine Zellenanordnung mit vier Speicherzellen eines aus Halbschalengehäuseteilen bestehenden Speichers,
Fig. 13 eine perspektivische Darstellung von offenen Gehäuseteilen ohne Behälterkörper (Blase bzw. Membran),
Fig. 14 eine perspektivische Darstellung von offenen Gehäuseteilen mit Behälterkörper (Blase bzw. Membran),
Fig. 15 eine Hartschaumplatte mit Vakuumplatte,
Fig. 16 verschiedene Gehäuseelementformen in ViertelSchalenbauweise zur räumlich freien Konfiguration eines Speichers,
Fig. 17 eine Kombination von 16 Speicherzellen des Speichers mit den unter Fig. 16 dargestellten Gehäuseelementformen,
Fig. 18 eine Schnittdarstellung einer Speicherecke mit Boden und Seitenteil als Profil eines thermisch und mechanisch optimierten Stecksystems,
Fig. 19 verschiedene Verstärkungs- und Verbindungselemente für das Speichergehäuse, welche mit Spanngurten verbunden werden,
Fig. 20 ein Rahmengerüst eines Speichers, der erhöhte mechanische Lasten abtragen muss,
Fig. 21 eine Schnittdarstellung als Vorderansicht der in Fig. 1 gezeigten Zelle,
Fig. 22 eine alternative Aufstellung bzw. Ausführung von Speicherzellen mit binär kaskadierten Volumen der Behälterkörper in der ersten Speichereinheit,
Fig. 23 eine Variante einer Zellenausführung mit Volumenkompensation über einen Ausdehnungsraum im Speichergehäuse,
Fig. 24 eine weitere Variante einer Zellenausführung mit Volumenkompensation und Druckhaltung über einen Federmechanismus im Speichergehäuse mit drei unterschiedlichen Druckstufen dargestellt,
Fig. 25 eine andere Variante einer Zellenausführung mit Volumenkompensation über einen Gasblasensack als Bestandteil des Behälterkörpers im Speichergehäuse mit drei unterschiedlichen Druckstufen dargestellt,
Fig. 26 eine erweiterte Reihenschaltung der Speicherzellen mit hydraulischer Ansteuerung.

In den Figuren sind gleiche Teile mit denselben Bezugszeichen versehen.

### Bevorzugte Ausführungsformen der Erfindung

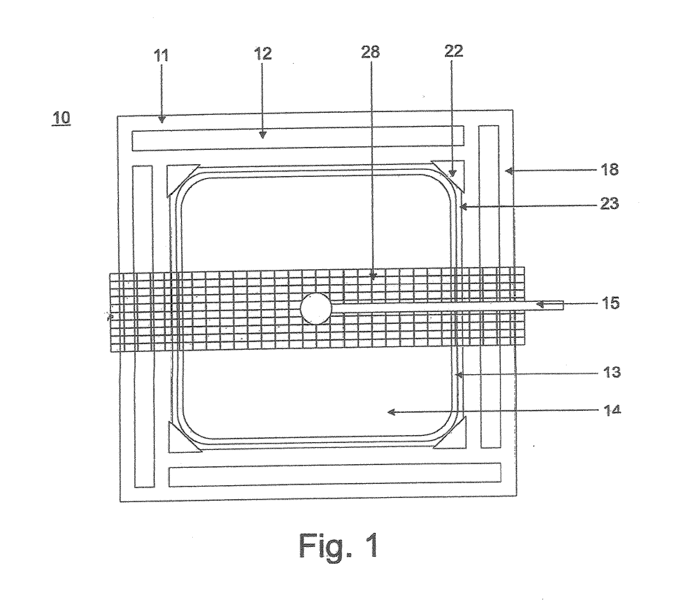

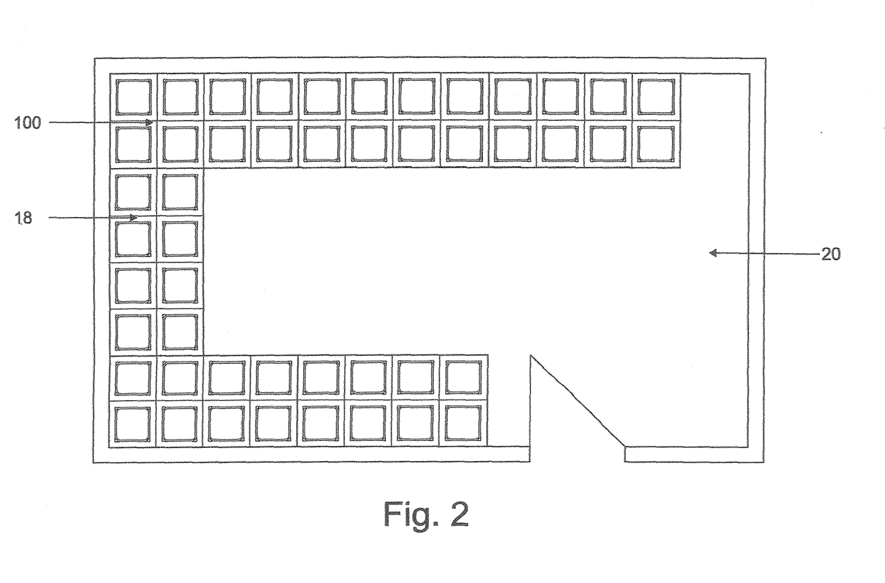

Fig. 1 zeigt eine Speicherzelle 10 eines Energiespeichers 100, der beispielsweise in Fig. 2 dargestellt ist. Dieser ist ein Wärmespeicher bzw. ein Energiespeicher 100 zur Speicherung thermischer Energie. Der Wärmespeicher dient zum Ein- und Ausspeichern von "Wärme" und/oder "Kälte" und eignet sich als Pufferspeicher zum Zwischenspeichern von Wärmeenergie über relativ kleinere Zeiträume, insbesondere über mehrere Tage, z.B. 2 bis 10 Tage. Er eignet sich auch als Saisonspeicher zum Ein- und Ausspeichern von Wärmeenergie über relativ lange Zeiträume, insbesondere über mehrere Monate bei entsprechender Dämmwerkstoffwahl. Der Speicher 100 ist sehr verlustarm bzw. weist einen hohen Effizienzgrad auf.

Wie Fig. 1 veranschaulicht, ist jede Speicherzelle 10 mit einer Wärmeisolation 11 aus einem formstabilen Hartschaum-Korpus mit integrierten Vakuumplatten 12 und einem Behälter bzw. elastischen Behälterkörper 13 für ein Fluid 14, z.B. Wasser, zur Aufnahme des Speicherfluids, versehen.

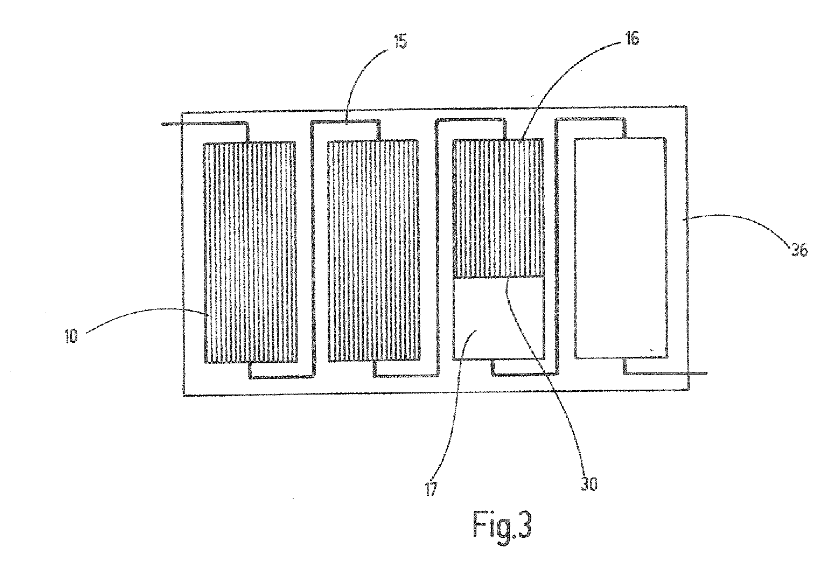

Fig. 2 zeigt die mehrere, untereinander durch Leitungen 15 (Fig. 1, Fig. 3), zumindest teilweise in Reihenschaltung, verbundenen Speicherzellen 10. Fig. 3 verdeutlicht die Reihenschaltung. Die dunklen Flächen in Fig. 3 entsprechen warmem Wasser 16. Die hellen Flächen entsprechen kaltem Wasser 17. In der dritten Zelle 10 ist eine Grenzschicht 30 zwischen kaltem und warmem Wasser vorhanden.

Fig. 3 veranschaulicht die Kombination von Speicherzellen 10 zu einem Zellenspeicher bzw. einer Speichereinheit 36. Das Grundprinzip des Zellenspeichers ist die Reihenschaltung (Serienschaltung) von Speicherzellen 10 in einem Zellengehäuse. Bei kleineren Speichern kann der Gesamtspeicher ein industriell hergestelltes Fertigteil sein. Je größer ein Speicher bemessen ist und je schwieriger eine Montage durch Türen, Treppen, Engstellen und dergleichen ist, desto mehr Einzelteile (Gehäuseelemente), die miteinander verbunden werden müssen, muss der Gesamtspeicher aufweisen. Die Gehäuseelemente sind zusammensteckbar und daher schnell montierbar. Mit nur wenigen standardisierten Formteilen 46 - 48 lassen sich beliebige Speichergeometrien realisieren. Durch die verwendete Quaderform der Speicherzellen 10 ist eine freie Kaskadierbarkeit der Gehäuseelemente möglich. Diese können an jeder Seite angebaut werden. Damit lässt sich jeder Raum 20 (Fig. 2), indem ein Speicher 100 eingebracht werden soll, nahezu vollständig ausnutzen.

Jede Speicherzelle 10 weist ein quaderförmiges Zellengehäuse 18 mit einem im Wesentlich geometrisch angepassten inneren Behälterkörper auf, so dass die Speicherzellen 10 nebeneinander und/oder übereinander ein-, zwei- oder dreidimensional zusammensetzbar sind. Die Form des Speicherzellengehäuses 18 ist im Wesentlichen ein Quader. Die Form des hohlen Gehäuse-Innenraums ist auch etwa ein Quader mit verstärkten gerundeten Ecken (Hohlkehlen). Je nach Speicherausführung können Speicherinnenwände eine Auskleidung (Auspolsterung) mit einem druckelastischen Material 23 (z. B. Flies oder weicher Schaumstoff) aufweisen.

Fig. 2 zeigt, wie die Speicherzellen 10 zu einem Gesamtzellenspeicher aneinanderliegend zusammengesetzt sein können. Jede Speicherzelle 10 umfasst ein Zellengehäuse 18 aus Dämmmaterial. Innerhalb des Zellengehäuses 18 ist der für das Fluid 14 undurchlässige elastische Behälterkörper 13 angeordnet (Fig. 1).

Das in den Figuren 1 und 2 gezeigte Bauartenprinzip ermöglicht eine flexible Herstellung und einen flexiblen Einsatz des Speichers 100. Dieser kann sehr kleine Speichervolumina mit wenigen hundert Litern aufweisen, z. B. 200 bis 3000 Liter für z. B. die Wärmespeicherung von einer Wärmepumpe oder von Sonnenkollektorenwärme in einem Einfamilienhaus, über mittlere Größenordnungen von bspw. 3 bis 200 Kubikmetern für z. B. die Wärmespeicherung aus einem Blockheizkraftwerk mittlerer Größe bis hin zu Speichervolumina in einer beliebigen Größenordnung, insbesondere aber mit mehreren tausend Kubikmetern für beispielsweise die Speicherung von Wärme aus einer leistungsstarken Gasturbinenanlage.

Der Speicher 100 ist bauartbedingt wesentlich leichter als herkömmliche Speicher aus einem druckfesten Metallkörper. Dieser kann zu erheblich geringeren Kosten produziert werden, obgleich seine Effizienz deutlich höher liegt. Dadurch dass der Speicher 100 aus mehreren Speicherzellen 10 oder Segmenten besteht, die zu einem Gesamtspeicher 100 zusammengesetzt werden, sind die Einzelsegmente bzw. Zellen 10 klein und leicht. Der gezeigte Speicher 100 ist auch leicht zu transportieren und kann problemlos auch in schwer zugänglichen Räumen 20 eingebracht werden, wie Fig. 2 zeigt. Die einzelnen Speicherzellen 10 können beliebig angeordnet werden und unterschiedliche geometrische Formen annehmen.

Der Speicher 100 hat im Unterschied zu herkömmlichen Speichern bauartbedingt nahezu keine inneren und äußeren Wärme- oder Vermischungsverluste. Die Vermeidung von inneren Verlusten durch Vermischung wird konstruktionsbedingt damit erreicht, dass das Speichervolumen nicht in einer einzigen Speicherzelle gespeichert wird, sondern mit mehreren Speicherzellen. Dadurch wird weitestgehend eine Grenzschicht zwischen dem wärmeren und dem kälteren Speichermedium (Flüssigkeit) erreicht bzw. auf nur eine Speicherzelle reduziert. Weiterhin werden keine gut wärmeleitfähigen Materialien, wie ein Metallkorpus oder innere Wärmetauscher, eingesetzt. Die Vermeidung bzw. Reduzierung der äußeren Verluste wird durch die kompakte Speicherbauweise erreicht. Die gezeigte Struktur vermeidet Materialien mit hohem Wärmeleitkoeffizienten (z.B. wärmeleitende Metallkörper). Die durchgängige Hochleistungs-Dämmschale bildet gleichzeitig das Speichergehäuse. Durch die metallfreien Werkstoffe des Speichers 100 kann keine Korrosion stattfinden.

Aufbauend auf dem erfindungsgemäßen Bauart-Grundprinzip des gezeigten Hocheffizienzspeichers lassen sich verschiedene Systemvarianten ausführen.

Eine erste Variante umfasst eine drucklose Speicherausführung. Die Verbindung mit den Lade- und Entladesystemen (Versorgungs-Systeme) erfolgt über externe Wärmetauscher.

Eine zweite Variante umfasst eine druckbeständige Speicherausführung mit einem verstärkten elastischen Behälterkörper 13 für eine direkte Einbindung in ein Versorgungs-System.

Eine dritte Variante umfasst fertig montierte bzw. vorkonfektionierte Speicherzellen 10 für kleine Speichervolumen (100 - 1000 Liter). Diese benötigt wenige Montageteile, d.h. im Wesentlichen Gehäuseschalen und Behälterkörper 13.

Eine vierte Variante ist für mittlere und große Speichergrößen (1000 - 5000 Liter und über 5000 Liter) geeignet und nutzt steckbare Gehäuse-Seitenwandteile, die vor Ort zu einem Speicher mittlerer Größe oder zu einem Großspeicher zusammengesetzt werden.

Eine fünfte Variante nutzt eine Gesamtzellenspeicherung derart, dass alle Speicherstellen bzw. Zellen 10 durch Reihenschaltung zu einer Speicherzellenanordnung zusammengefasst werden.

Eine sechste Variante nutzt eine Mehrzellenspeicherung derart, dass bei der Gesamtzellenspeicherung ein Gesamt-Wärmespeicher durch Reihenschaltung der einzelnen Speicherzellen 10 insgesamt nur einen Ein- und/oder Ausgang aufweist. Bei dieser Mehrzellenspeicherung werden mehrere Zellen 10 und/oder Zellengruppen aus dem Speicher 100 herausgeführt.

Bei einer siebten Variante ist ein Wärmetauscher innerhalb des Speichers 100 und/oder der Speicherzelle 10 angeordnet. Möglich ist also, einen Wärmetauscher innerhalb einer Speicherzelle 10 zu integrieren. Dies wäre vorteilhaft, wenn ein Funktionsprinzip eines, insbesondere kleinen Metallspeichers (100 - 1000 Liter) und/oder eines Speichers mit nur einer Speicherzelle 10 verwendet wird.

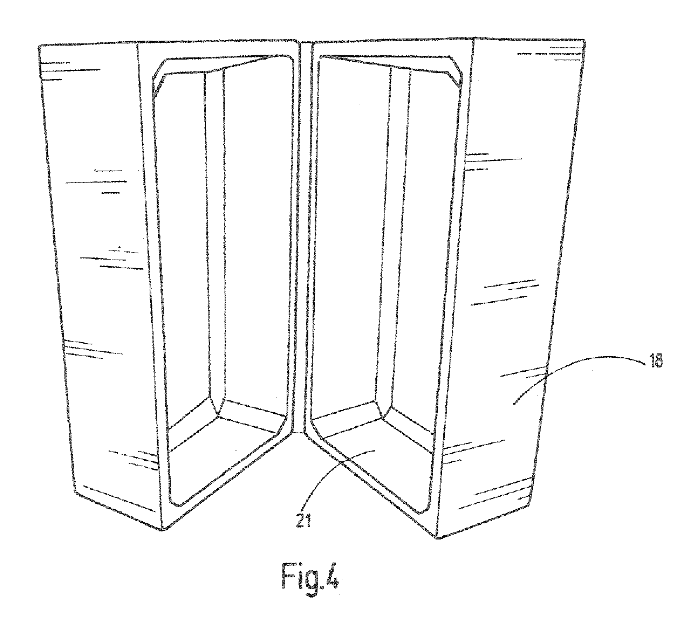

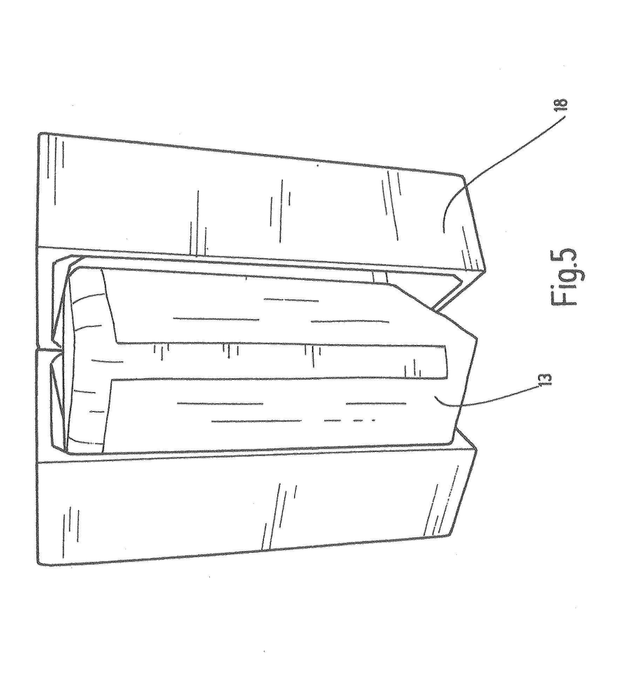

Anhand der Figuren 1, 4 und 5 lässt sich der Aufbau einer einzelnen Speicherzelle 10 gut beschreiben. Das Zellengehäuse 18 besteht aus Dämmmaterial und hat im Wesentlichen die wesentlichen Funktionen einer Wärmedämmung nach außen bzw. eines Herabsetzen der Transmissionswärmeverluste sowie einer Aufnahme des Behälterkörpers 13 in einem hohlen Innenraumbereich 21, wie die Figuren 4 und 5 zeigen. Der Behälterkörper ist ein Fluid-Aufnahmeelement bzw. eine Blase oder Membran. Das Gehäusematerial besteht aus formstabilem Hartschaum, vorzugsweise Polystyrol oder Polyurethan. Für die Hochleistungsdämmung werden Sandwichelemente mit den integrierten und/oder innenliegenden Vakuum-Isolations-Paneelen 12 (Fig. 1) verwendet. An Eckenbereichen werden Eckelemente 22 bzw. eine Verstärkung in Form einer Hohlkehle (Eck-Verstärkungen aus Dämmmaterial) verwendet. Dadurch wird eine optimierte Lastverteilung und ein besserer Dämmwert in den kritischen Eckenbereichen erreicht.

Durch das Gehäuse 18 werden die Leitungen 15 (Fig. 3) des Behälterkörpers 13 nach außen geführt und/oder innerhalb des Gehäuses 18 mit der nächsten Speichermembran bzw. dem nächsten Körper 13 verbunden. Möglich ist also auch eine Kombination aus beidem.

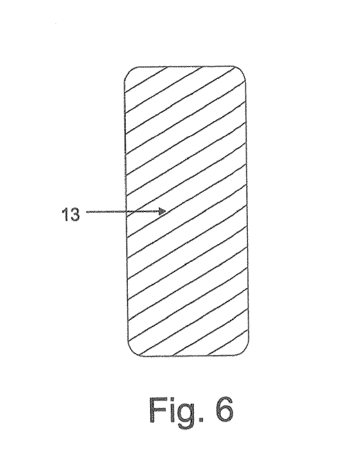

Fig. 6 zeigt den Behälterkörper 13, der aus einem elastischen Material besteht bzw. ein elastisches Material umfasst. Durch die Ausführung des Behälterkörpers 13 entfallen externe Volumenkompensationsbauteile. Dieser sorgt für eine Volumenkompensation bei einer temperaturbedingten Ausdehnung des Speicherfluids. Diese Kompensations-Funktion ist quasi im Speicher bzw. in der Speicherzelle 10 integriert. Der elastische Behälter 13 kann auch als elastischer Speichermembran-Sack bzw. Blase bezeichnet werden. Die Blase ist eine elastische, wasserdichte und thermostabile Membran in Quaderform mit einer Dampfsperre und besteht aus einem für die jeweiligen Anforderungen geeigneten Elastomere-Verbundwerkstoff. Ein Basismaterial 23 (elastisches Material zur Volumenkompensation) kann ein vulkanisierter flexibler Kautschuk sein. Dieses Material ist weitestgehend alterungsbeständig und ist für Temperaturen bis 120°C geeignet. Am oberen und unteren Ende der Blase ist die Ein- und Ausgangsleitung 15 angeordnet. Die Membran bzw. der Körper 13 hat im gefüllten bzw. aufgeblasenen Zustand etwa die gleiche Form wie das Innenvolumen des Speichergehäuses 18, d.h. ein Quader mit gerundeten Ecken.

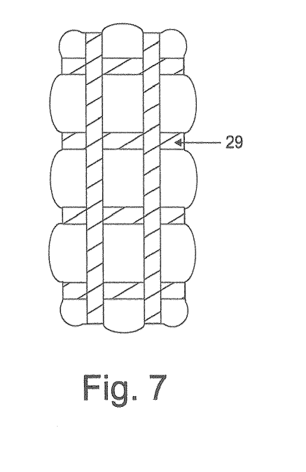

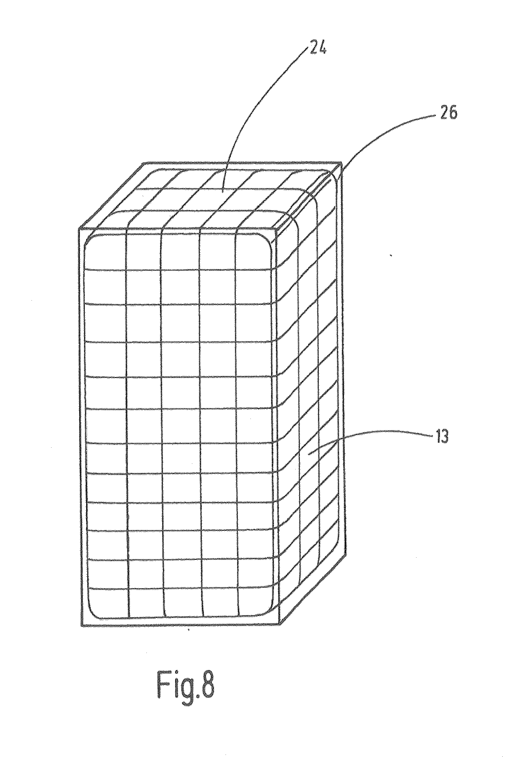

Wie die Figuren 7 und 8 zeigen, ist jeder Behälterkörper 13 mit einem Stützgeflechtkäfig 24 (Fig. 7) aus einem Gewebenetz 25 (Fig. 8) versehen, um eine Ausdehnung des elastischen Materials zu begrenzen. Die Blase ist dadurch druckbeständig. In Fig. 8 sind eine innere Abmessung des Gehäuses 18 als Quader 26 und die innenliegende gewebeverstärkte Blase zu sehen.

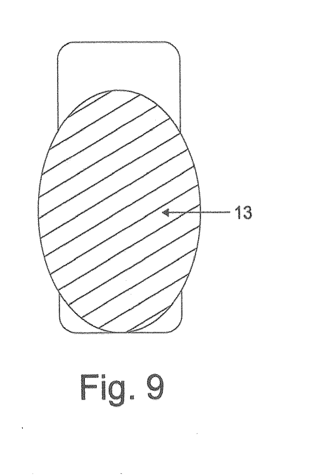

Wie Fig. 9 veranschaulicht, wäre eine nur aus Kautschuk bestehende Blase nicht druckbeständig. Diese würde sich bei einer Druckbeaufschlagung wie ein Luftballon ausdehnen, wie in der Zeichnung zu sehen ist. Dieses wird verhindert, indem die elastische Blase durch das lastaufnehmendes und formgebende Stützgeflecht verstärkt wird. Diese Blasenverstärkung kann durch ein externes Element nämlich dem Gewebenetz 25 aus reißfestem Glas- oder Kunststoffgewebe erreicht werden. Auch kann die Verstärkung direkt in die Kautschuk-Blase miteinvulkanisiert sein, so dass ein Verbundmaterial vorhanden ist. Je engmaschiger dieses Gewebenetz 25 ausgeführt ist, desto geringer ist die Blasenausbeulung pro Gewebemasche. Über das Gewebenetz 25 wird die Elastizität der Blase eingeschränkt und die maximale Ausdehnung der Blase begrenzt.

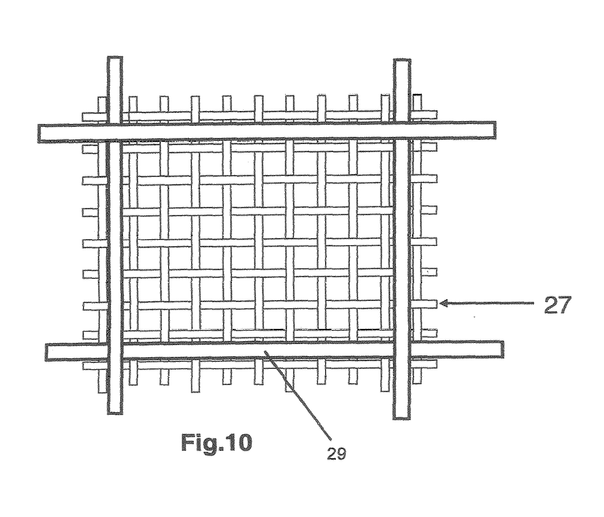

In Fig. 10 ist ein Grund-Gewebegeflecht mit formgebenden Verstärkungsbändern 27 zu sehen. Jedes Zellengehäuse 18 ist mit Verbindungs- und/oder Verstärkungselementen, beispielsweise mit diesen Spannelementen 28 (Fig. 1) zur mechanischen Verstärkung versehen. Das Gehäuse 18 ist quasi mit Spanngurten verstärkt.

Zur weiteren Verbesserung der Formgebung und Erhöhung der mechanischen Festigkeit können die Eck- und Randbereiche der Blase mit formstabilen Elementen im Sinne einer Teil-Rahmenkonstruktion verstärkt werden. Auch formgebende Winkelelemente, welche über Spannbänder oder Netzgewebe miteinander verbunden sind, können als Verstärkung eingesetzt werden. Auch diese Art der Verstärkungen kann sowohl mit externen Elementen oder auch innerhalb der Blase eingearbeitet erreicht werden. Auch eine Kombination ist möglich. Die Verstärkungen innerhalb der Blase können gleichzeitig als Halter und zur Positionierung von Sensoren, insbesondere Temperaturfühlern, genutzt werden.

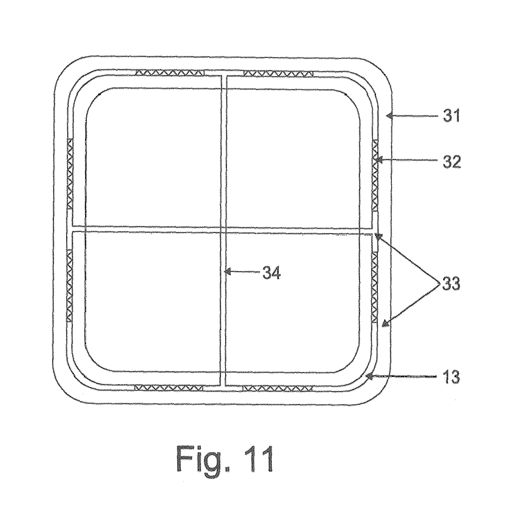

Fig. 11 zeigt eine schematische Darstellung, bzw. nicht maßstabsgerechte Darstellung, einer Blase aus Verbundwerkstoff. Diese umfasst zur Formstabilität und Lastabtragung neben einer innenliegenden Gewebegeflecht-Verstärkung auch eingelassene formstabile Eck- und Mittelteile. Diese formstabilen Verstärkungselemente können innerhalb der Blase über Spannelemente, beispielsweise zugfeste Stäbe oder Seile, die bei einer druckbeaufschlagten Blase zugbelastet sind, in allen räumlichen Ebenen miteinander verbunden sein. Die Blase umfasst ein Elastomer-Material 31, eine Gewebeverstärkung 32, formstabile und formgebende Elemente 33 und/oder Spannstangen 34 oder Seile zur Formgebung in der Blase.

Jedes Zellengehäuse kann mit den Verbindungs- und/oder Verstärkungselementen 33, 34, insbesondere aus formstabilen Platten oder Winkeln (Fig. 11), und/oder mit Spannelementen 28 (Fig. 1, 10) zur mechanischen Verstärkung versehen sein.

Je nach Größe, Geometrie und Druckniveau der Blase sind die entsprechenden Verstärkungselemente zu dimensionieren. Die Elastizität des Blasenmaterials und des Verstärkungsgeflechts können so gewählt werden, dass diese durch eine Gesamtausdehnung die Volumenkompensation leisten können. Wenn das Speichergehäuse 18 keinen Blasendruck aufnehmen soll, dann ist der Hohlraum im Speichergehäuse (Fig. 4) auf die maximale Membranausdehnung zu dimensionieren. Als Absicherung der Blase kann ein Überdruckventil vorhanden sein. Die Blase wird über dieses Sicherheitsorgan druckentlastet, bevor diese Schaden nehmen kann.

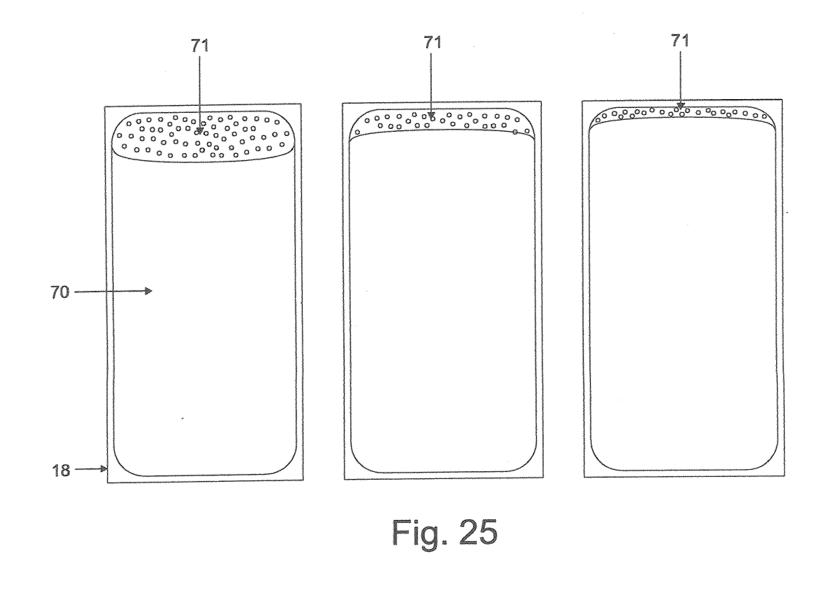

Optional kann in der Flüssigkeitsblase eine innenliegende Gasblase zur Volumenkompensation und Druckhaltung eingebracht sein, die mit der Blase ein Gesamtelement bildet, wie anhand von nachfolgenden Figuren 25 erläutert ist (Kompensation der Volumenausdehnung) durch Kompression der innenliegenden Gasblase.

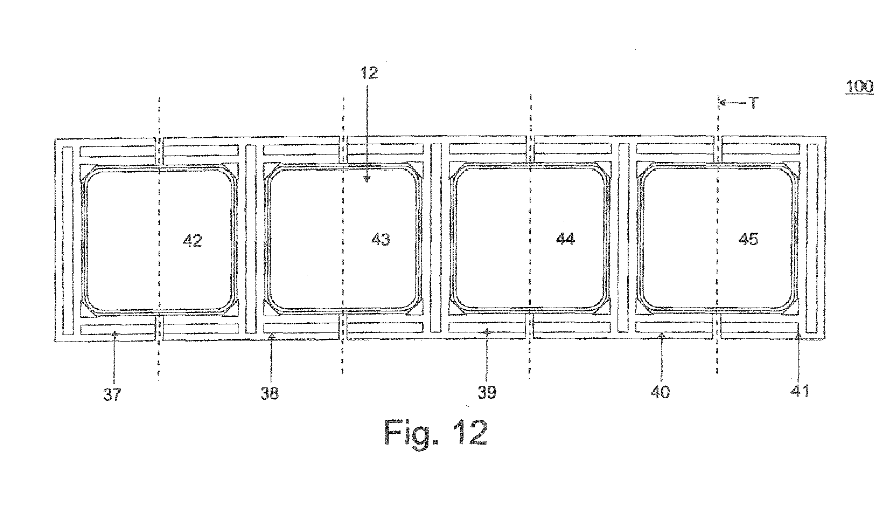

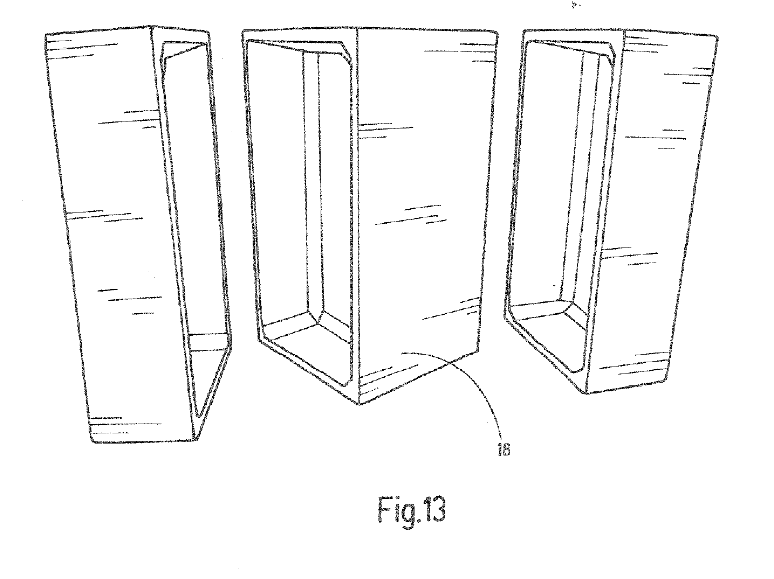

Die Figuren 12 bis 14 veranschaulichen Gehäuseelemente in Halbschalenbauweise. Fig. 12 zeigt einen Speicher 100 in länglicher Bauform, welcher aus insgesamt fünf Gehäuseelementen 37 bis 41 in Halbschalenbauweise besteht. Es sind zwei U-Halbschalen-Elemente 37, 41 und drei Doppel-T-Halbschalen-Elemente 38, 39, 40 vorhanden. Die Halbschalen sind in Fig. 13 zu sehen, wobei in Fig. 12 die innenliegenden Vakuum-Isolations-Paneele bzw. Vakuumplatten 12 gezeigt sind. Diese werden nur bei Speichern mit erhöhten Dämmanforderungen eingesetzt.

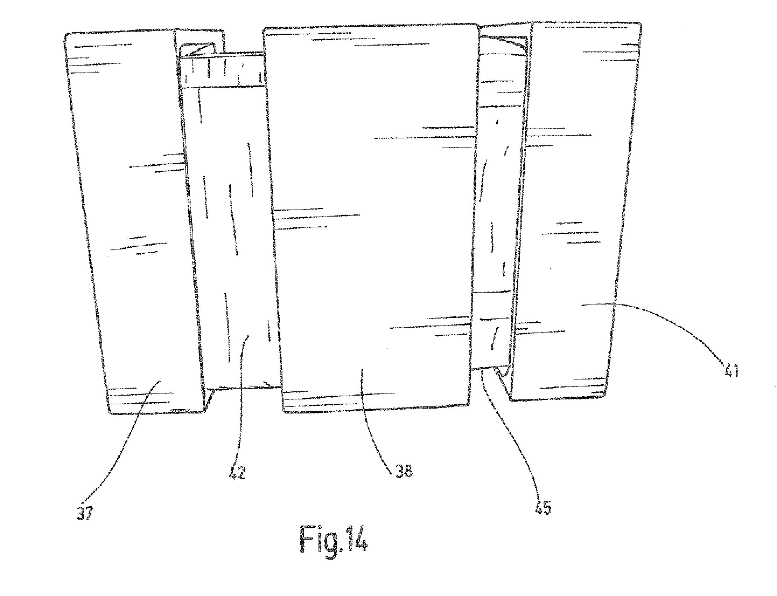

Dieser Gesamtspeicher umfasst fünf Halbschalen-Elemente 37 bis 41 und vier Membranspeichersäcke 42 bis 45. Jede Trennungsebene der Halbschalen wurde mit einem Trennstrich T gekennzeichnet. Fig. 14 zeigt eine verkleinerte, offen gezeigte Anordnung mit drei Halbschalen-Elemente 37, 38, 41 und zwei Membranspeichersäcke 42, 45.

Weitere, hier nicht gezeigte, Halbschalenelemente für andere Speicher-Geometrien sind möglich. Andere Anordnungen lassen sich aus den drei Grundelementen 37, 38 und 42 in Kombination mit einer Viertelschalenbauweise verwirklichen.

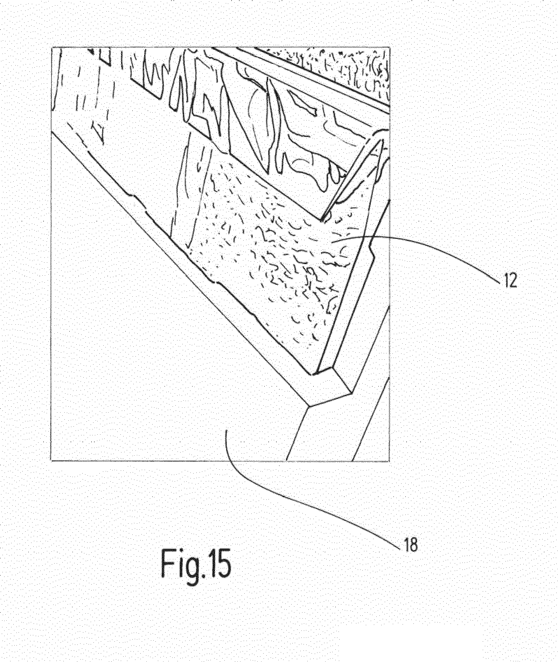

Fig. 15 zeigt eine Hartschaumplatte bzw. das Gehäuse 18 mit integrierter Vakuumplatte 12. Diese kann eine Aluminiumfolie, ein Vlies, gepresste Kieselsäure und/oder äußere Barriere-Folien umfassen.

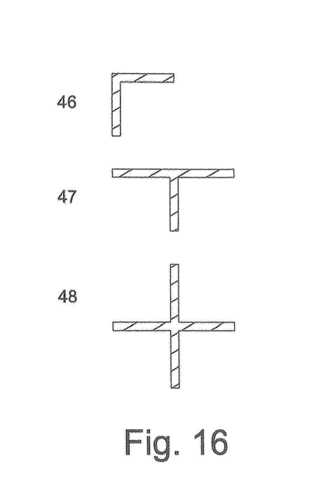

Fig. 16 zeigt Gehäuseelemente 46, 47, 48 in Viertelschalenbauweise. Mit den drei Speichergehäuse-Grundelementen 46, 47, 48 in Viertelschalenform lassen sich beliebige Speichergeometrien realisieren, zum Beispiel lange, schmale, L-förmige oder quadratische Speicher 100 realisieren. Eine Speichermembran ist stets von vier Gehäuseelementen umgeben. Das Grundelement 46 hat eine L-Form. Das Grundelement 47 hat eine T-Form. Das Grundelement 48 hat eine Kreuzform.

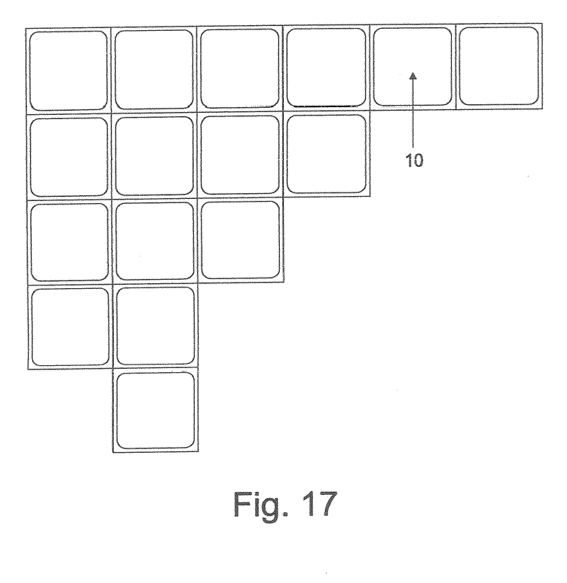

Fig. 17 zeigt eine Kombination von 16 Speicherzellen 10 eines Speichers 100 in Viertelschalenbauweise.

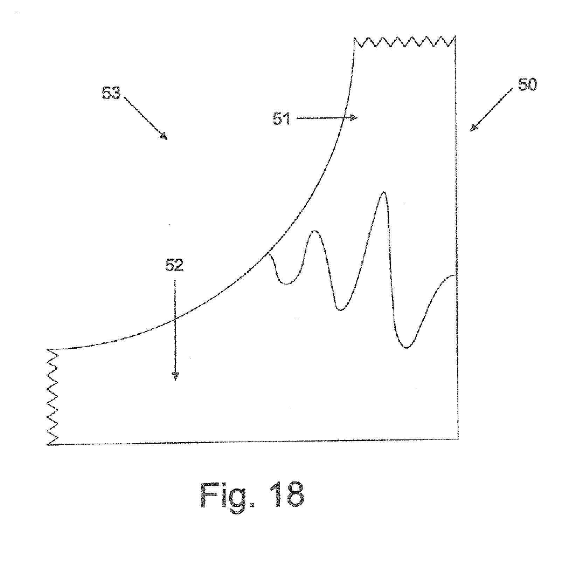

Fig. 18 zeigt ein Winkelprofil 50 eines Steckelementes. Große Speichergrößen können beispielsweise Höhen von über 30 Meter haben. Bei solchen Speichern können nicht mehr die in den Figuren 12 und 17 gezeigten Gehäuseelemente in Halb- oder Viertelschalenbauweise ohne zusätzliche Maßnahmen eingesetzt werden. Daher werden zusätzliche Seitenwände, Seitenwandteilelemente und/oder Verbindungs-Profil-Systeme verwendet.

Je nach mechanischen und/oder thermischen Anforderungen, den Anforderungen einer optimierten Montage vor Ort oder einer einfachen und kostengünstigen Produktion, können unterschiedliche Profile zur Verbindung von Gehäuse- oder Wandelementen gewählt werden.

Das in Fig. 17 gezeigte Winkelprofil 50 wird für eine Eckverbindung eines Hartschaum-Speicherelement-Gehäuses 18 zwischen einer Wandplatte 51 und einer Bodenplatte 52 eingesetzt. Das Profil 50 wird höchsten thermischen und mechanischen Anforderungen gerecht. Zu erkennen ist auch die Hohlkehle 53, in der die Blase bzw. der Körper 13 aufliegt. Sämtliche Gehäuseteile können als Stecksystem konzipiert werden.

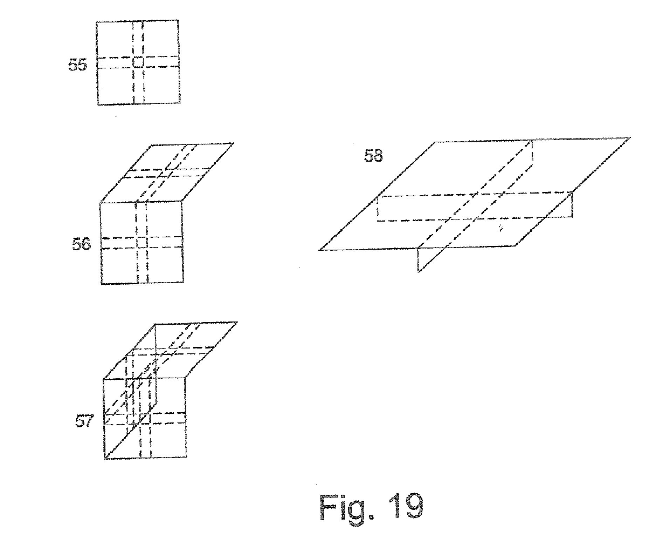

Fig. 19 zeigt Verstärkungs- und Verbindungselemente 55 bis 58 für das Speichergehäuse 18. Die Gehäuseelemente, z.B. 46 bis 48, sind steckbar ausgeführt. Weder ein Hartschaumgehäuse noch Hartschaum-Steckprofile sind in der Lage, einer inneren Druckbeanspruchung (Druckausdehnung der elastischen Blase) standzuhalten. Eine bevorzugte Blasenkonstruktion ist derart ausgeführt, dass sie keine Drücke an das Speichergehäuse überträgt. Das Speichergehäuse ist alternativ so zu verstärken, dass die von der Blase wirkenden Drücke aufgenommen werden können. Auch eine Kombination von beiden Prinzipien, in der die Blase (Körper 13) und das Speichergehäuse 18 je einen Teildruck aufnehmen, ist möglich.

Eine andere, kostengünstige Möglichkeit ist die Gehäuseverstärkung mit Spannelementen, wie Gurte, Bänder oder Stangen. Diese können vertikalen und horizontalen Kräften ausgesetzt werden. Für die Montage können Führungsnuten im Hartschaumgehäuse vorgesehen werden. Bei der Montage ist eine definierte Vorspannung der Spannelemente zweckmäßig. Diese Vorspannung könnte mittels einer Zugfederverbindung erfolgen.

Um eine weitere Erhöhung der Formstabilität des Speichergehäuses zu erhalten, können die Spannelemente über formstabile Platten oder Winkel geführt werden, welche an den Lastmaxima am Speichergehäuse platziert sind. An definierten Positionen, z.B. auf einer Zellenebene und/oder einer Gesamtspeicherebene, sind diese formstabilen Elemente in im Hartschaumspeichergehäuse vorzusehenden Führungen einzubringen. Ein Profil ist quasi im Hartschaumelement integriert, wie in Fig. 11 gezeigt ist. Platten und Winkel können auch durch Spannelement-Kreuzungen verstärkt werden.

Die in Fig. 19 dargestellten Verbindungs-, Formgebungs- und Spannelemente zur mechanischen Verstärkung des Speichergehäuses können sein:
- Eine Platte 55 mit Spanngurtschlaufen,
- Ein L-Winkel 56 mit zwei Schenkeln mit Spanngurtschlaufen, die durch zwei senkrechte Achsen verlaufen,
- Ein Eckwinkel 57 mit drei Flachseiten und mit in drei KoordinatenRichtungen bzw. drei Achsen verlaufenden Spanngurten,
- Ein Kombinations-Winkel 58, bzw. eine Mittel-Verbindungsplatte, der z.B. als ein Mittelverbinder von vier Speicherzellen ausgeführt ist. Die vorhandene Spannelementführung ist nicht dargestellt. Auch hier sind die Spannelemente und Schlitze über alle drei Achsen zu führen. Das Element besteht aus einer Kombination von vier Eckwinkeln. Mit Kombinationen aus den drei Winkel 55 - 57 (Grundelemente) lassen sich alle Konstruktionselemente (Winkel und Platten) realisieren.

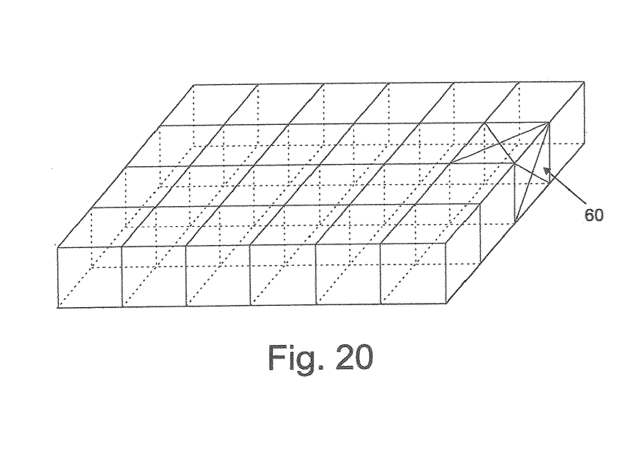

Um eine weitere Stabilisierung der Speicherkonstruktion zu erreichen, kann eine Rahmen-Gerüstkonstruktion eingesetzt werden. Mit dieser mechanisch sehr belastbaren, um jede Speicherzelle 10 angeordnete Konstruktion lassen sich hohe Festigkeiten erreichen. Die Festigkeit dieser Konstruktionsmatrix lässt sich weiter steigern, indem noch weitere Zwischenverbinder und, wie in Fig. 20 gezeigt ist, Kreuzverbinder 60 eingesetzt werden. Fig. 20 zeigt ein Rahmengerüst für 24 Speicherzellen. Auch eine Kombination einer festen Rahmen-Gerüstkonstruktion und Spanngurten ist möglich.

Alternativ oder zusätzlich kann eine Gehäusebeplankung eingesetzt werden. Weil das Speicher-Hartschaumgehäuse 18 an sich keine hohe mechanische Festigkeit hat, kann ein zusätzlicher mechanischer Schutz für das Dämmmaterial und insbesondere für die Vakuumplatten 12 und/oder die Blase bzw. den Körper 13 verwendet werden. Diese formstabile Gehäuse-Plattenverkleidung kann z. B. aus Blech ausgeführt sein. Diese kann am gesamten Speicher 100 oder auch an einzelnen gefährdeten Stellen, z.B. in Verkehrsbereichen, angebracht sein. Diese Verkleidung kann eine statische Funktion haben oder auch nur eine Schutzhülle darstellen.

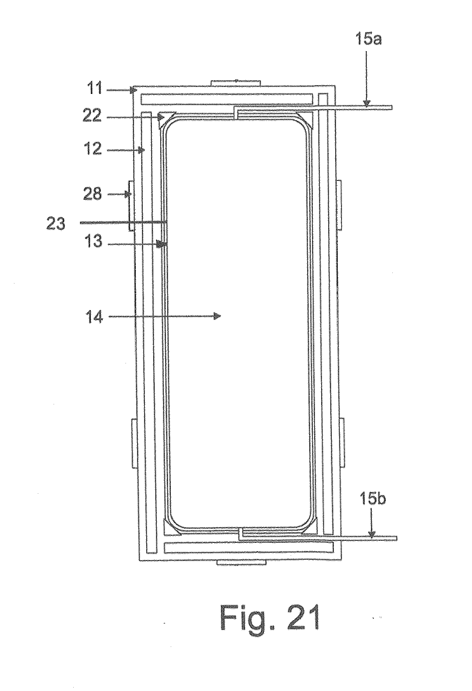

Fig. 21 zeigt die in Fig. 1 gezeigte Zelle 10 im Schnitt, jedoch von der Seite, wobei eine obere Zuleitung 15a und eine untere Zuleitung 15b dargestellt sind.

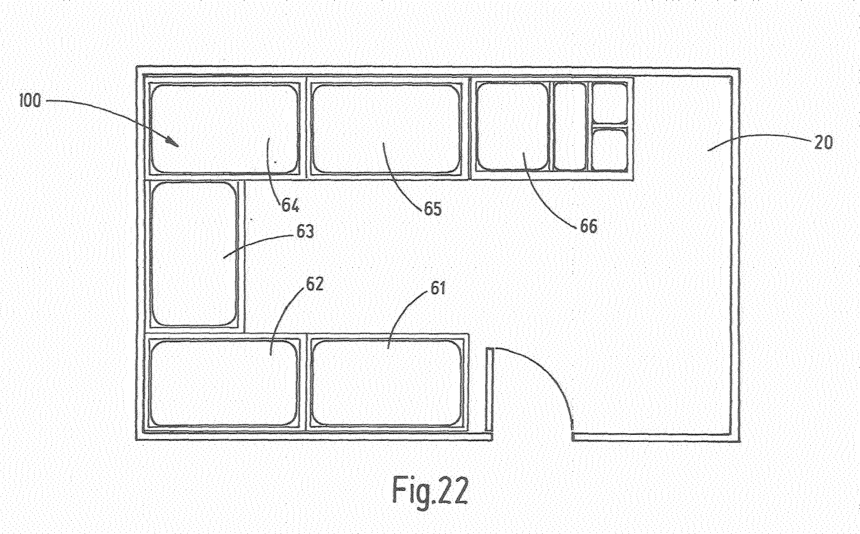

Dieses Zellenstruktur-Prinzip kann auch für den in Fig. 22 gezeigten Speicher 100 verwendet werden. Der gleiche Raum 20 (Fig. 2) umfasst sechs Speicher-Einheiten 61 bis 66. Diese haben bei gleichem Speichervolumen nur neun Speicherzellen anstatt wie im Beispiel der Fig. 2, das 48 Speicherzellen zeigt.

Der Speicher nach dem beschriebenen gleichen Baukastenprinzip bzw. Modulprinzip kann sowohl als druckloser wie auch als druckbeaufschlagter Speicher ausgeführt werden.

Bei einer Variante des Speichers arbeitet dieser drucklos bzw. ist mit einem geringen Überdruck am oberen Blasenbereich (< 0,5 bar) versehen. Als Speicherdruck ist auch der statische Druck entsprechend der Speicherhöhe zu berücksichtigen. Bei einem 10 m hohen Speicher würde der Druck im Bodenbereich etwa 1 bar betragen. Der drucklose Speicher ist z.B. hydraulisch über Wärmetauscher in ein System eingebunden.

Bei der Variante als druckbeaufschlagter Speicher ist der Gesamtspeicher entsprechend so zu dimensionieren und mit den beschriebenen Maßnahmen auszuführen (Fig. 7, Fig. 8, Fig. 11, Fig. 19, Fig. 20), dass dieser dauerhaft für den Auslegungsdruck ausgelegt ist. Der druckbeaufschlagter Speicher ist vorzugsweise hydraulisch direkt in ein System eingebunden.

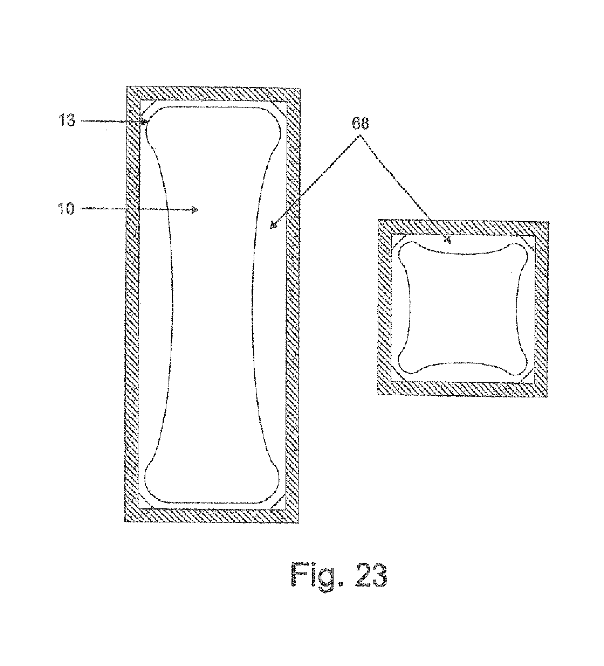

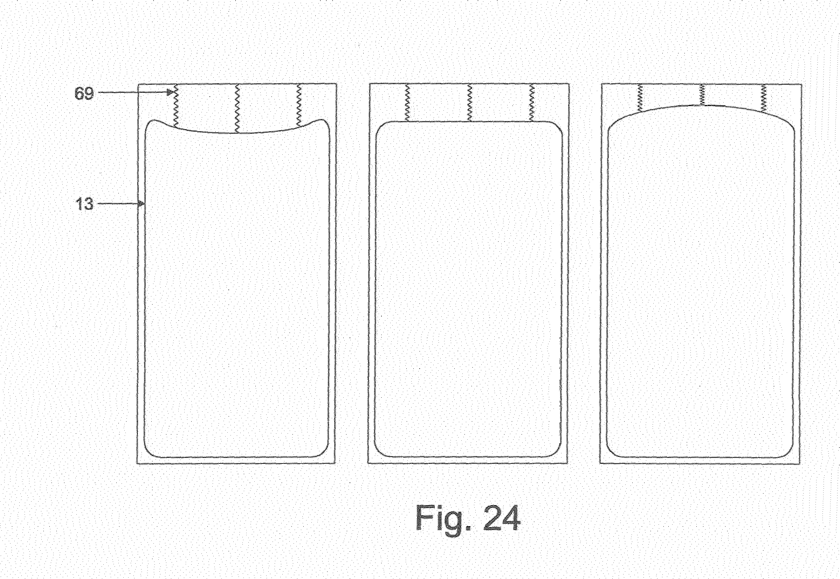

Anhand der folgenden Figuren 23 und 24 soll eine Druckhaltung und Kompensation der Volumenausdehnung bei der Erwärmung des Speicherfluids näher erläutert werden.

Die Volumenkompensation in herkömmlichen Wärmespeichern wird üblicherweise über ein externes Ausdehnungsgefäß realisiert. Dadurch, dass die Speicherblase elastisch ist, kann eine Verformung (Ausdehnung) innerhalb der Blase (Körper 13) bzw. innerhalb des Speichergehäuses stattfinden. Wenn die Volumenausdehnung bei der Erwärmung des Speicherfluids im formstabilen Speichergehäuse 18 durch Ausdehnung der elastischen Membran (Körper 13) erfolgt, dann ist im Speichergehäuse 18 im kalten Speicherzustand entweder ein Hohlraum vorhanden oder das Speichergehäuse 18 verfügt über eine elastische Innenschicht, welche eine Volumenänderung der Membran aufnehmen kann. Es kann in Ausdehnungsräumen 68 z.B. ein Weichmaterial wie Schaumstoff oder Flies eingesetzt werden.

Fig. 23 zeigt einen Speicher bzw. eine Speicherzelle 10 mit den elastischen Ausdehnungsräumen 68 in einem Gehäuseinnenbereich. Anstatt eines kompressiblen weichen Materials kann zur Volumenkompensation auch eine Feder-Vorrichtung 69 bzw. eine Federplatte eingesetzt werden, wie Fig. 24 zeigt. Bei dieser Konstruktion könnte der Federmechanismus gleichzeitig eine Auslösung des Sicherheitsventils bei maximaler Federbelastung bewirken.

Bei druckbelasteten Speichern kann im oberen Bereich innerhalb des Membransackes eine weitere Blase, welche mit kompressiblem Gas gefüllt ist, eingelassen sein. Diese Gasblase wäre über ein Füllventil nach außen zu führen.

Fig. 25 zeigt eine Volumenkompensation innerhalb des Membransacks durch eine Gasblase. Bei diesem Blase-System befindet sich in der flüssigkeitsgefüllten Hauptblase 70 eine weitere gasgefüllte Blase 71. Bei steigendem Speicherdruck wird die Gasblase 71 immer weiter komprimiert. Dieses System ist auch zur Druckhaltung geeignet.

Grundsätzlich kann auch eine Volumenkompensation außerhalb des Speichers erfolgen. Weiterhin wäre es möglich, eine Elastizität des Speichergehäuses für eine Volumenkompensation zu nutzen.

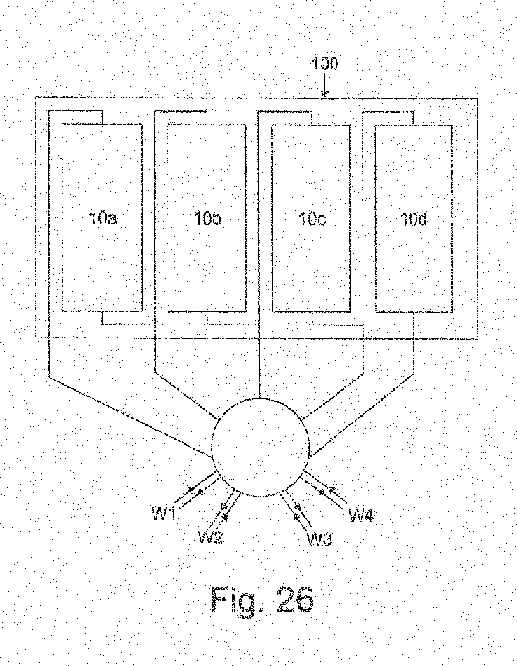

Fig. 26 zeigt eine hydraulische Schaltung von Speicherzellen 10a, 10b, 10c, 10d. Das hydraulische Grundprinzip des Speichers mit einer Reihenschaltung von Speicherzellen kann erweitert werden durch eine Herausführung der Anschlüsse einzelner Speicherzellen oder Speicherzellengruppen zu einem Bündel oder Cluster. Beliebig viele verschiedene Wärmequellen W1 bis W2 und auch Wärmeentnehmer (Verbraucher) W3 bis W4 sind an ein Verteilsystem 72 angeschlossen, das die Zellen 10a bis 10d speist. Diese erweiterte Reihenschaltung greift einzelne Speicherzellen oder einen Speicherzellenbündel ab. Durch die segmentierte Zuordnung von Speicherzellen mittels des in Fig. 26 gezeigten Verteilsystem-Prinzips kann eine beliebige Ein- und Ausspeicherung von Wärme mit unterschiedlichen Wärmequellen und auch mit unterschiedlichen Temperaturniveaus erfolgen. Auch die Wärmeentnahme kann für unterschiedliche Abnehmer (Verbraucher) bei unterschiedlichen Temperaturniveaus aus verschiedenen Speicherzellen erfolgen. Eine Speicherzelle kann z.B. eine höhere Temperatur von beispielsweise 70°C zur Trinkwarmwasseraufbereitung aufweisen. Andere Speicherzellen können eine Temperatur von 50°C für eine statische Heizung zur Verfügung stellen. Weitere Zellen mit einer niedrigeren Temperatur von 26°C stehen für die Fußbodenheizung zur Verfügung. Mit dem temperaturabhängigen Ein- und Ausspeichern von Wärme in verschiedenen Zellen ist eine kaskadierte Mehrfachnutzung von Wärmeströmen über verschiedene Verbraucher in unterschiedlichen Temperaturstufen möglich.

Je nach hydraulischer Schaltung der Speicherzellen ist eine Volumenkompensation für jede Speicherzelle, für Speicherzellengruppen oder für den Gesamtspeicher notwendig.

In den Speicherzellen 10 kann eine beliebige Anzahl von Messsensoren zur Temperaturmessung integriert werden. Diese können extern eingebracht werden oder mit einer innenliegenden Stützkonstruktion verbunden sein oder auch bereits fertigungstechnisch Bestandteil der Blase sein. Eine einfache Variante könnte ein in der Speicherzelle mittig angeordnetes, hängendes Messkabel mit Temperaturfühler umfassen. Auch könnten in dem Speichermembransack Tauchhülsen für externe Messaufnehmer eingearbeitet sein. Es können weitere Messaufnehmer verwendet werden, z.B. für eine Füllstandsermittlung, eine Druckermittlung und/oder eine Ermittlung weiterer physikalischer Zustandsgrö-βen.

Auch können Sicherheits- und Schutzeinrichtungen für den Speicher 100 bzw. seinen Zellen 10 verwendet werden. Je nach Anwendungsfall des Speichers können verschiedene Schutz- und/oder Begrenzungsorgane genutzt werden. So kann ein Überdruckschutz mit einem Ventil vorhanden sein, bei dem das Ventil öffnet, wenn eine definierte Druckstufe erreicht ist. Auch ist ein Übertemperaturschutz möglich. Ein Ventil schließt, wenn die Ladetemperatur einen Grenzwert erreicht hat. Auch ist der Einsatz eines Vakuumbrechers bzw. eines Unterdruckbelüfters möglich. Ein Ventil öffnet, wenn eine Membran entleert wird bzw. Unterdruck entsteht. Diese Elemente können im Speicher integriert oder extern angeordnet sein.

Es werden auch Hydraulik und Steuerungskomponenten eingesetzt. Diese Komponenten (Pumpen-Steuerungs-Armaturengruppe (PSA-Gruppe)) können extern angeordnet sein. Vorzugsweise sind sie in einem Gesamtspeichersystem eingebunden. Das bedeutet, dass die PSA-Gruppe mit kurzen Leitungswegen direkt mit dem Speichergehäuse verbunden ist. Dieses beinhaltet auch die Einbeziehung der PSA-Gruppe in die Gesamtdämmung zur Vermeidung von äußeren Verlusten.

Der erfindungsgemäße Energiespeicher kann als eine integrierte Einheit mit dem Speichergehäuse ausgeführt sein sowie ein schnell montierbares Gehäuse umfassen, welches das Wärmedämmkonzept und sämtliche Komponenten beinhaltet um die peripheren Anlagen zu betreiben. Dieses sind vormontierte oder steckbare Verbindungen für hydraulische Komponenten wie Rohre, Pumpen, Ventile sowie elektrische und elektronische Komponenten wie Stromversorgung, die Steuerung, Sensoren, Aktoren. Dadurch wird der Speicher zu einer zentralen Systemeinheit.

Die Ansteuerung einzelner Speicherzellen oder Zellengruppen kann über eine Ventilsteuerung erfolgen, um Fluide mit unterschiedlichen Temperaturen getrennt voneinander ein- und auszuspeichern. Dadurch kann eine mehrfache Wärmeausnutzung entsprechend dem Temperaturgefälle des Speicherfluids realisiert werden.

Einsetzbar ist eine Steuerungseinheit, die neben einer Beladungs- und Entladungssteuerung der Speicherzellen noch weitere Funktionen beinhaltet.

Die Funktionen insbesondere sind:
- eine Regelung und Versorgung der einzelnen Wärmeabnehmer, insbesondere einer Heizung, Lüftung und/oder Sanitäreinrichtung auf Basis einer erweiterten Sensorik (Vorlauftemperatur, Rücklauftemperatur, Durchflussmengen, gespeicherte Wärmemenge, Speichertemperaturen sowie Umwelt- und Prognosedaten) und Ansteuerung von Pumpen, Ventilgruppen und Wärmeerzeugern
- Überwachungsintelligenz: Ein adaptiv gebildetes mathematisches Modell wird fortlaufend mit den Istwerten verglichen, bei einer Abweichung außerhalb des Toleranzbereiches erfolgt eine automatisch generierte Meldung
- Fortlaufendes Berechnen einer Wärmebedarfsprognose auf Basis Umweltdaten (Wetterprognose, heuristische und aktuellen Daten wie Wochentag, Verbrauchsniveau)
- Kommunikation mit OperationCenter: externe Ansteuerung der Wärmeproduktion an/aus, Meldung des prognostizierten Wärmebedarfes und der freien Speicherkapazität zur zentralen Berechnung eines das Stromnetz optimal unterstützenden Anlagenbetriebes
- Autarke Regelung / Steuerung bei Kommunikationsausfall
- Überwachung der Anlagenzustände, automatische Weiterleitung von Zustands- und Fehlermeldungen
- Zentrale Ansteuerung eines Elektroheizstabes zur Speicherladung um Last aus dem Stromnetz nehmen zu können
- Zusatzservices: Erfassung und Datenübertragung von Zählerständen/Verbrauchswerten (z.B. Wasser, Gas, Stromverbrauch)
- Zusatzservices: Automatische Generierung eines verbrauchsabhängigen Energiepasses auf Basis der Verbrauchswerte
- Data Processing (Datenlogging)
- Ankopplung und Verarbeitung von Standard-Automatisierungsprotokollen
- Kommunikationsschnittstelle per Kabel oder Funkstandardprotokoll

Die Steuerung kann eine Kopplung zwischen dem Verbund-Stromnetz und der dezentralen Wärmeerzeugung herbeiführen.

Stromerzeugende Wärmeerzeuger (z.B.) werden dann über die Steuerung gestartet, wenn über eine Kommunikationsschnittstelle mit einem OperationCenter, welcher das Stromnetz hinsichtlich der Lastsituation den größten Bedarf hat und damit auch die höchste Einspeisevergütung erzielt wird.

Somit kann mit dieser Steuerungstechnik nicht nur Primärenergie eingespart werden sondern über eine Verbindung von Anlagen das Stromnetz im Spitzenlastbereich unterstützt und im Schwachlastbereich bzw. im Bereich der Energieüberschüsse bedarfgerecht belastet und damit ausgeregelt werden. Das bedeutet, dass diese technologische Anwendung den Gleichzeitigkeitsfaktor erhöht und bedarfsgerecht zum Beispiel zum Ausgleich von nicht regelbarer Umweltenergie (Sonne, Wind) Über-und Unterenergiesituationen ausregeln kann.

Die Steuerung ist auf einen wärmegeführten Betrieb ausgelegt, d.h. es wird immer mindestens so viel Wärme im Speicher vorgehalten wie bis zur nächsten geplanten Speicherbeladung benötigt wird. Dieser Wert wird in Abhängigkeit vorgenannter Parameter errechnet. So ist der optimale Speicherladepunkt in Abhängigkeit zur Situation des Elektro-Verbundnetzes möglich.

Diese zentrale Steuerungseinheit (OperationCenter) ermöglicht die Kopplung einer großen Anzahl von elektroenergieaufnehmender oder elektroenergieabgebender Wärmeerzeuger mit dem Stromnetz. Die dezentralen Speichersteuerungen werden mit Daten-Informationen versorgt. Eine Strom-Netzanalyse in Abhängigkeit der zur Verfügung stehenden Elektroenergie-Erzeuger (aus konventionellen Kraftwerken und aus regenerativer Energie) und der Lastsituation ist möglich. Weitere Daten und Prognosen wie die Summe der frei verfügbaren Wärmespeicherkapazitäten, die prognostizierte Wärmeverbrauchsmengen und der prognostizierte Strom-Energiebedarf. Daraus errechnet sich eine zeitliche gestaffelte und leistungsmäßige An- und Abwahl von stromerzeugenden Wärmeerzeugern (Netzentlastung) oder stromaufnehmenden Wärmeerzeugern (Netzbelastung) zur optimalen Netzausregelung.

Durch das beschriebene Anwendungskonzept und die Steuerung der Anlage lassen sich durch diese technologische Anwendung wärmeerzeugende Anlagen mit dem Verbundstromnetz koppeln und das Stromnetz entlasten bzw. ausregeln.

Die Erfindung ist nicht auf diese Beispiele beschränkt, so kann ein Merkmal eines Beispiels auch mit einem anderen Merkmal kombiniert werden.

### Bezugszeichenliste

- 100: Energiespeicher

- 10: Speicherzelle
- 11: Wärmeisolation
- 12: Vakuumplatten (VIP)
- 13: elastischer Behälterkörper (Blase bzw. Membran)
- 14: Fluid
- 15: Leitungen
- 16: Fluid (mit hoher Temperatur)
- 17: Fluid (mit niedriger Temperatur)
- 18: Zellengehäuse
- 19: -
- 20: Raum
- 21: Innenraumbereich
- 22: Eckelemente
- 23: Füll- bzw. Weichmaterial
- 24: Stützgeflechtkäfig
- 25: Gewebenetz
- 26: Quader (quaderförmiger Gehäusekörper einer Speicherzelle)
- 27: Verstärkungsbänder (feingliedriges Verstärkungsgewebe des Behälterkörpers)
- 28: Spannelemente
- 29: Verstärkungsbänder (formgebende Verstärkungsbänder des Behälterkörpers)
- 30: Grenzschicht (zwischen Flüssigkeiten unterschiedlicher Temperatur)
- 31: Elastomer-Material des Behälterkörpers
- 32: Gewebeverstärkung
- 33: Formstabile und formgebende Elemente (in das Elastomer-Material integriert)
- 34: Formgebende Spannstangen (im Innenbereich des Behälterköpers)
- 35: -
- 36: Speichereinheit
- 37 - 41: Gehäuseelemente-Halbschalen
- 42 - 45: elastische Behälterköper (wie 13)
- 46, 47, 48: Gehäuseelemente
- 49: -
- 50: Winkelprofil
- 51: Wandplatte
- 52: Bodenplatte
- 53: Hohlkehle
- 54: -
- 55 - 58: Verbindungselemente
- 59: -
- 60: Kreuzverbinder
- 61-66: Speicher-Einheiten
- 68: Ausdehnungsräume
- 69: Feder-Vorrichtung
- 70: Hauptblase
- 71: Gasblase
- 72: Verteilsystem

- W1 - W2: Wärmequellen
- W3 - W4: Wärmeentnehmer (Verbraucher)

- T: Trennstrich

## Patentansprüche

1. Energiespeicher (100) zur Speicherung thermischer Energie, wobei der Speicher als Wärme- und/oder Kältespeicher ausgeführt und mit einer Wärmeisolation (11) sowie einem elastischen Behälter für ein Speichermedium, insbesondere ein Fluid (14), versehen ist, **gekennzeichnet durch** mehrere, untereinander **durch** Leitungen, zumindest teilweise in Reihenschaltung, verbundenen Speicherzellen (10), die zu einem Gesamtzellenspeicher, insbesondere aneinanderliegend, zusammengesetzt sind, wobei jede Speicherzelle (10) ein Zellengehäuse (18) aus Dämmmaterial umfasst und innerhalb des Zellengehäuses (18) ein für das Speichermedium undurchlässiger Behälterkörper (13) angeordnet ist, in dem vorzugsweise eine Volumenkompensationsvorrichtung integriert ist.

2. Energiespeicher nach Anspruch 1, **dadurch gekennzeichnet, dass** jede Speicherzelle (10) ein quaderförmiges Zellengehäuse (18) mit einem im Wesentlichen geometrisch angepassten inneren Behälterkörper (13) aufweist, so dass die Speicherzellen (10) nebeneinander und/oder übereinander ein-, zwei- oder dreidimensional zusammensetzbar sind.

3. Energiespeicher nach Anspruch 1 oder 2, **dadurch gekennzeichnet, dass** jeder Behälterkörper (13) aus einem elastischen Material besteht oder dieses umfasst.

4. Energiespeicher nach Anspruch 3, **dadurch gekennzeichnet, dass** jeder Behälterkörper (13) mit einem Stützgeflechtkäfig (24) aus einem Verstärkungsgewebe (27) versehen ist, um eine Ausdehnung des elastischen Materials zu begrenzen, wobei vorzugsweise eine Druckfestigkeit mit zusätzlich unterstützenden Verstärkungsbändern (29), formstabilen und formgebenden Elementen (33) und im Behälterkörperinnenbereich angeordneten Zugseil- oder Stabverstärkungen (34) erreicht wird, wobei vorzugsweise eine zusätzliche Rahmenkonstruktion aus formstabilen Verstärkungselementen eingesetzt wird.

5. Energiespeicher nach einem der vorhergehenden Ansprüche, **dadurch gekennzeichnet, dass** eine aus Halbschalen und/oder Viertelschalen bestehende Gehäusekonstruktion des Gesamtspeichers mit T-, Doppel-T-, U-, L-und/oder kreuzförmigen Gehäuseelementen (37, 38, 39, 40, 41) vorhanden ist.

6. Energiespeicher nach einem der vorhergehenden Ansprüche, **dadurch gekennzeichnet, dass** jedes Zellengehäuse (18) mit Verbindungs- und/oder Verstärkungselementen (55, 56, 57, 58), insbesondere aus formstabilen Platten oder Winkelelementen, und/oder mit Spannelementen (28) zur mechanischen Verstärkung versehen ist.

7. Energiespeicher nach einem der vorhergehenden Ansprüche, **dadurch gekennzeichnet, dass** zumindest ein Teil der Speicherzellen (10), mindestens jedoch zwei Speicherzellen (10), insbesondere aber jede Speicherzelle (10) mit einem Sensor, insbesondere einen Temperatursensor, einem Füllstandssensor und/oder einem Drucksensor, versehen ist.
